# EUROPÄISCHE PATENTSCHRIFT

(11) **EP 3 106 938 B1**
(45) Veröffentlichungstag und Bekanntmachung des Hinweises auf die Patenterteilung: **06.10.2021**
(21) Anmeldenummer: 16166776.1
(22) Anmeldetag: 25.04.2016
(51) Int. Cl.: G05B 19/042, G05B 23/02

(54) **WERKZEUGSYSTEM ZUR ANZEIGE EINER ÜBERLAGERUNG VON PROZESSKURVEN VON MINDESTENS EINER MONTAGEANLAGE UND EIN VERFAHREN FÜR EIN WERKZEUGSYSTEM EINER MONTAGEANLAGE**
TOOL SYSTEM WITH AN OVERLAY OF PROCESS CURVES OF AT LEAST ONE ASSEMBLY SYSTEM AND A METHOD FOR A TOOL SYSTEM OF AN ASSEMBLY SYSTEM
SYSTEME D'OUTIL POUR LA PRÉSENTATION D'UNE SUPERPOSITION DE COURBES DE PROCESSUS D'AU MOINS UNE INSTALLATION DE MONTAGE ET PROCEDE POUR UN SYSTEME D'OUTIL D'UNE INSTALLATION DE MONTAGE

(30) Priorität: 19.06.2015 DE 102015211313
(43) Veröffentlichungstag der Anmeldung: 21.12.2016
(73) Patentinhaber: Robert Bosch GmbH, 70442 Stuttgart (DE)
(72) Erfinder: Court, Denis, 73614 Schorndorf (DE); Hoge, David, 88677 Markdorf (DE); Doelfs, Martin, 70771 Leinfelden-Echterdingen (DE); Wirth, Christian Daniel, 88048 Friedrichshafen-Kluftern (DE); Schmidt, Nils-Holger, 10245 Berlin (DE); Hewing, Michael, 88045 Friedrichshafen (DE)

(56) Entgegenhaltungen:
- EP-A1- 1 111 550
- EP-A1- 2 434 357
- EP-A1- 2 775 685
- DE-A1- 10 336 648
- US-A1- 2012 272 308
- US-B1- 6 603 477
- SVANTE ALNÅS: "JSON / TNDS 2.0 Structure ; OMA-DM-DMNG-2011-0024-INP_JSON_Structure", OMA-DM-DMNG-2011-0024-INP_JSON_STRUCTURE, OPEN MOBILE ALLIANCE (OMA), 4330 LA JOLLA VILLAGE DR., SUITE 110 SAN DIEGO, CA 92122 ; USA , 25. Mai 2011 (2011-05-25), Seiten 1-7, XP064182879, Gefunden im Internet: URL:http://ftp.oma-DM.org/Public_documents /DM/DM20/2011/ [gefunden am 2014-09-18]

## Beschreibung

Die vorliegende Erfindung bezieht sich auf ein Werkzeugsystem zur Anzeige einer Überlagerung von Prozesskurven von mindestens einer Montageanlage und ein Verfahren für ein Werkzeugsystem einer Montageanlage.

Bei Montageanlagen, wie Schraubanlagen, Schweißanlagen, usw., kann Fügetechnik zum Einsatz kommen oder können Prozesse stattfinden, die Daten liefern, die in einem zweidimensionalen Koordinatensystem abbildbar sind (z.B. Schraubtechnik, Schweißtechnik, Nieten etc.). Hier können je nach Bedarf verschiedene Steuerungen Verwendung finden, welche jeweils einen der Prozesse steuern und damit die gerade benötigte Fügetechnik durchführen.

Bei einem solchen Werkzeugsystem muss sich der Anwender sehr schnell einen Überblick über die Abläufe von Prozessen in der laufenden Produktion verschaffen können, um mögliche Ursachen für Fehler zu eruieren und diese in einer tiefergehenden Analyse zu bestätigen.

Derzeit ist es jedoch sehr aufwändig, Daten von verschiedenen Schraubsteuerungen miteinander zu vergleichen. Die Daten müssen hierzu exportiert und beispielsweise in einem Officeprogramm, wie insbesondere Excel der Fa. Microsoft Corporation, USA, weiterverarbeitet werden, was sehr zeitaufwändig ist. Im Vergleich zu solchen Problemen für ein einziges derzeitiges Werkzeugsystem, ist der Datenvergleich über verschiedene Werke hinweg noch weitaus aufwändiger.

EP 2 434 357 A1 zeigt ein Tracesystem für Technologiedaten und/oder Programmereignisse. US 6,603,477 B1 zeigt ein Verfahren zum Bereitstellen einer graphischen Anzeige basierend auf einer Benutzerauswahl von Anzeigevariablen. DE 103 36 648 A1 zeigt ein System und Verfahren zur web-basierten Überwachung und Steuerung mehrerer räumlich verteilter Anlagen. Alle genannten Dokumente sowie die US 2012/272308 und die EP 2 775 685 A1 zeigen beispielsweise keine überlagerte Anzeige von Prozesskurven mehrerer Werkzeugelemente bei einem Werkzeugsystem, bei dem sich eine Datensicherheitsstufe für eine Datenbank, welche die Prozesskurven speichert, unterscheidet von einer Datensicherheitsstufe für eine Datenbehandlungseinrichtung und eine Auswahlbereitstelleinheit, welche zur Erstellung der überlagerten Anzeige der Prozesskurven verwendet werden, wie in Anspruch 1 genannt.

Es ist Aufgabe der vorliegenden Erfindung, ein Werkzeugsystem zur Anzeige einer Überlagerung von Prozesskurven von mindestens einer Montageanlage und ein Verfahren für ein Werkzeugsystem einer Montageanlage bereitzustellen, mit welchen die zuvor genannten Probleme gelöst werden können. Insbesondere sollen ein Werkzeugsystem zur Anzeige einer Überlagerung von Prozesskurven von mindestens einer Montageanlage und ein Verfahren für ein Werkzeugsystem einer Montageanlage bereitgestellt werden, bei welchen sich der Anwender sehr schnell einen Überblick über die Qualität in der laufenden Produktion verschaffen kann.

Diese Aufgabe wird durch ein Werkzeugsystem zur Anzeige einer Überlagerung von Prozesskurven von mindestens einer Montageanlage nach Anspruch 1 gelöst. Bei dem beschriebenen Werkzeugsystem kann sich der Anwender sehr schnell einen Überblick über in dem Werkzeugsystem laufende Prozesse verschaffen.

Durch die Überlagerung von beispielsweise Schraubkurven mehrerer Spindeln als Werkzeugelemente wird dem Schraubprozessexperte als Anwender die Möglichkeit gegeben, Schraubkurven über mehrere Spindeln hinweg zu vergleichen, um Unterschiede zu erkennen und Probleme im Produktionsprozess zu identifizieren. Dies kann ein Vergleich zweier oder mehrerer Spindeln sein, die unmittelbar nebeneinander, im gleichen Werk oder auch in verschiedenen Werken weltweit eingesetzt werden. Dies erleichtert dem Experten die Problemsuche im Störungsfall sowie die Prozessoptimierung. Außerdem trägt dies zur standortübergreifenden Qualitätssicherung bei.

Daher gelingt es dem Anwender durch die intuitive und einfache Bedienung des Werkzeugsystems einfach und schnell, vergleichende Darstellungen zur Problemanalyse und eine Prozessoptimierung zu erzeugen.

Somit bietet die Funktionalität des beschriebenen Werkzeugsystems eine drastische Zeitersparnis, bzw. sogar überhaupt die Möglichkeit überlagernde Darstellungen von Prozesskurven oder Prozessabläufen mit vertretbarem Zeitaufwand zu realisieren.

Durch alle diese Vorteile des Werkzeugsystems wird ein wichtiger Beitrag zur kontinuierlichen Qualitätsverbesserung bei der Montage der Montageanlage geleistet.

Vorteilhafte weitere Ausgestaltungen des Werkzeugsystems sind in den abhängigen Ansprüchen angegeben.

Die Aufgabe wird zudem durch ein Verfahren für ein Werkzeugsystem einer Montageanlage nach Anspruch 13 gelöst.

Das Verfahren erzielt die gleichen Vorteile, wie sie zuvor in Bezug auf das Werkzeugsystem genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen, soweit sie durch den Schutzbereich der beigefügten Ansprüche abgedeckt sind. Im Rahmen des beanspruchten Schutzumfangs kann der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild einer Montageanlage mit einem Werkzeugsystem gemäß einem ersten Ausführungsbeispiel;
Fig. 2 eine Ansicht einer Anzeige auf einer Anzeigeeinrichtung des Werkzeugsystems;
Fig. 3 ein Flussdiagramm eines Verfahrens für ein Werkzeugsystem einer Montageanlage gemäß dem ersten Ausführungsbeispiel;
Fig. 4 ein Flussdiagramm einer Routine des Verfahrens von Fig. 3; und
Fig. 5 ein stark vereinfachtes schematisches Schaubild von Prozessdaten, die in dem Werkzeugsystem gemäß einem zweiten Ausführungsbeispiel versendet werden.

In den Figuren sind gleiche oder funktionsgleiche Elemente, sofern nichts anderes angegeben ist, mit denselben Bezugszeichen versehen.

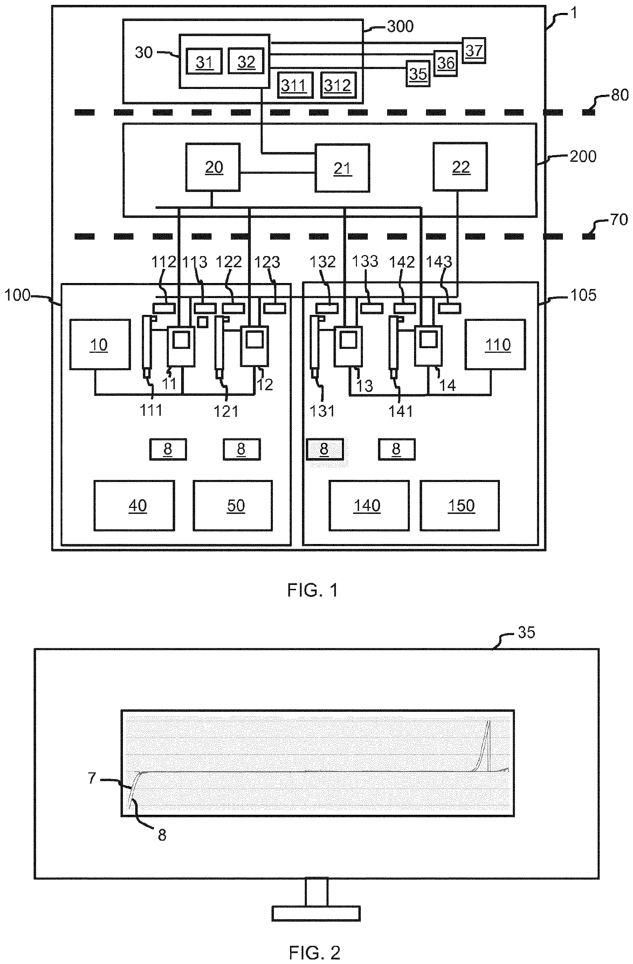

Fig. 1 zeigt ein Werkzeugsystem 1, das bei Montageanlagen 100, 105 zum Einsatz kommt. Die Montageanlagen 100, 105 können beispielsweise jeweils eine Fertigungslinie für ein Fahrzeug, ein elektronisches Gerät, Möbel, usw. sein. Die Montageanlagen 100, 105 können jedoch zusätzlich oder alternativ auch als mehrere einzelne Montagestationen ausgestaltet sein.

Mit dem Werkzeugsystem 1 können Werkstücke 8 mit Hilfe von Produktionssteuerungen 10, 110 und Werkzeugsteuerungen 11, 12, 13, 14 bearbeitet werden. Hierfür steuern die Werkzeugsteuerungen 11, 12, 13, 14 jeweils ein Werkzeugelement 111, 121, 131, 141 an. Die Produktionssteuerung 10 ist den Werkzeugsteuerungen 11, 12 übergeordnet und steuert die Koordination der Werkzeugsteuerungen 11, 12 im Produktionsablauf oder Montageablauf in der Montageanlage 100. Die Produktionssteuerung 110 ist den Werkzeugsteuerungen 13, 14 übergeordnet und steuert die Koordination der Werkzeugsteuerungen 11, 12, 13, 14 im Produktionsablauf oder Montageablauf in der Montageanlage 105. In jeder der Montageanlagen 100, 105 können auch weniger oder mehr als zwei Werkzeugsteuerungen vorgesehen sein. Insbesondere muss auch die Anzahl der Werkzeugsteuerungen in den Montageanlagen 100, 105 nicht gleich sein.

Neben den Steuerungen 10 bis 14 hat das Werkzeugsystem 1 eine erste Datenbehandlungseinrichtung 20, eine erste Datenbank 21, eine zweite Datenbank 22, eine zweite Datenbehandlungseinrichtung 30, die eine Auswahlbereitstelleinheit 31 und eine Überlagerungseinheit 32 aufweist Verbindungen zu Web-Anwendungen, wie einer als herkömmlicher Computerbildschirm ausgeführten Web-Anzeigeeinrichtung 35, einer als Tablet-PC (PC = Personalcomputer) ausgeführten Web-Anzeigeeinrichtung 36 und einer als Mobiltelefon ausgeführten Web-Anzeigeeinrichtung 37, bereits existierende Qualitätsmanagementsysteme 40, 140, bereits existierende Prozessdatencockpits 50, 150, die als Anzeigeeinrichtung ausgeführt sein können, eine erste Firewall 70, und eine zweite Firewall 80. Die Web-Anzeigeeinrichtungen 35, 36, 37 sind mit dem Werkzeugsystem 1 jeweils über das Internet verbunden.

Hierbei sind die Werkzeugsteuerungen 11, 12, 13, 14 und die Werkzeugelemente 111, 121, 131, 141 in der Montageanlage 100 angeordnet, welche durch die erste Firewall 70 von einer Schutzzone 200 getrennt sind. Der Schutzzone 200 sind die erste Datenbehandlungseinrichtung 20 sowie die erste und zweite Datenbank 21, 22 zugeordnet. Die Schutzzone 200 ist durch die zweite Firewall 80 von einem Büro- oder Office-Intranet 300 getrennt. Dem Office-Intranet 300 ist die zweite Datenbehandlungseinrichtung 20 zugeordnet. In dem Office-Intranet 300 können Anwender in einem den Montageanlagen 100 und/oder 105 zugeordneten Büro auf die Daten 112, 113, 122, 123, 132, 133, 142, 143 der Montageanlagen 100, 105 zugreifen.

Im Betrieb sendet die Werkzeugsteuerung 11, nachdem mit dem Werkzeugelement 111 eines oder mehrere der Werkstücke 8 bearbeitet worden ist/sind, Prozessdaten 112, wie einzelne Messdaten oder Messdaten in Kurvenform, usw., an die erste Datenbehandlungseinrichtung 20. Zudem sendet die Werkzeugsteuerung 11 dann oder zumindest teilweise gleichzeitig auch Qualitätsdaten 113 an die zweite Datenbank 22. Die Qualitätsdaten 113 können auch von den Prozessdaten 112 umfasst sein, und so zusammen mit den Prozessdaten 112 an die erste Datenbehandlungseinrichtung 20 gesendet werden. Die erste Datenbehandlungseinrichtung 20 nimmt die Prozessdaten 112 entgegen und speichert sie an der richtigen Stelle in der ersten Datenbank 21. Die Qualitätsdaten 113 werden in der zweiten Datenbank 22 gespeichert.

Der Betrieb der Werkzeugsteuerungen 12, 13, 14 funktioniert analog zu dem zuvor beschriebenen Betrieb der Werkzeugsteuerung 11, so dass auch die Prozessdaten 122, 132, 142 an die erste Datenbehandlungseinrichtung 20 gesendet werden, von der ersten Datenbehandlungseinrichtung 20 entgegengenommen und an der richtigen Stelle in der ersten Datenbank 21 gespeichert werden und die Qualitätsdaten 123, 133, 143 in der zweiten Datenbank 22 gespeichert werden.

Bei dem Werkzeugsystem 1 sind die Auswahlbereitstelleinheit 31 und die Überlagerungseinheit 32 der Datenbehandlungseinrichtung 30 vorgesehen, um zu vom Anwender ausgewählten Überlagerungsdaten 311 mit Anzeigedaten 312 eine Anzeige von entsprechend überlagerten Prozesskurven erzeugen zu können. Hierfür stellt die Auswahlbereitstelleinheit 31 dem Anwender eine Ansicht bereit, um die zu überlagernden Werkzeugsteuerungen 11, 12, 13, 14, deren Prozesskanäle und entsprechende Kurven 7, 8 (Fig. 2) auszuwählen. Hierbei ist es möglich, dass Daten eines Prozessprogramms und/oder eines Werkzeugelements 111, 121, 131, 141 und/oder verschiedener Werkzeugelemente 111, 121, 131, 141 in einem Werk bzw. Montageanlage 100, 105 oder werksübergreifend bzw. aus mehr als einer Montageanlage 100, 105 ausgewählt werden. Die Überlagerungseinheit 32 überlagert die vom Anwender ausgewählten Kurven und sendet das Ergebnis als die Anzeigedaten 312 an eine Anzeigeeinrichtung, wie beispielsweise die Anzeigeeinrichtung 35.

Fig. 2 zeigt eine Anzeige auf der Anzeigeeinrichtung 35 als Überlagerung von Prozesskurven 7, 8 von zwei Werkzeugsteuerungen, die in Fig. 2 als Beispiel Schraubkurven sind. Die zwei Werkzeugsteuerungen können beispielsweise die Werkzeugsteuerungen 11, 12 oder auch die Werkzeugsteuerungen 11, 13 sein. Ganz allgemein können die Prozesskurven von zwei Werkzeugsteuerungen überlagert werden, egal ob sich die Werkzeugsteuerungen in derselben oder in unterschiedlichen Montageanlagen 100, 105 befinden, wobei die Montageanlagen 100, 105 auch an verschiedenen Standorten des Betreibers des Werkzeugsystems 1, auch in verschiedenen Ländern, angeordnet sein können.

In Fig. 2 sind die Schraub- bzw. Prozesskurven 7, 8 als Kurven oder Graphen in einem zweidimensionalen Koordinatensystem angezeigt. Die Darstellung gemäß Fig. 2 ist beispielsweise eine Berichtsanzeige, die für einen Experten bei der Wartung des Werkzeugsystems 1 interessant ist.

Außerdem ist es optional möglich, die überlagerten Kurven 7, 8 in verschiedenen Farben oder Stricharten, beispielsweise gestrichelt, durchgezogen, usw., in der Bedienoberfläche darzustellen. Damit ist eine Unterscheidung der Kurven 7, 8 einfacher möglich.

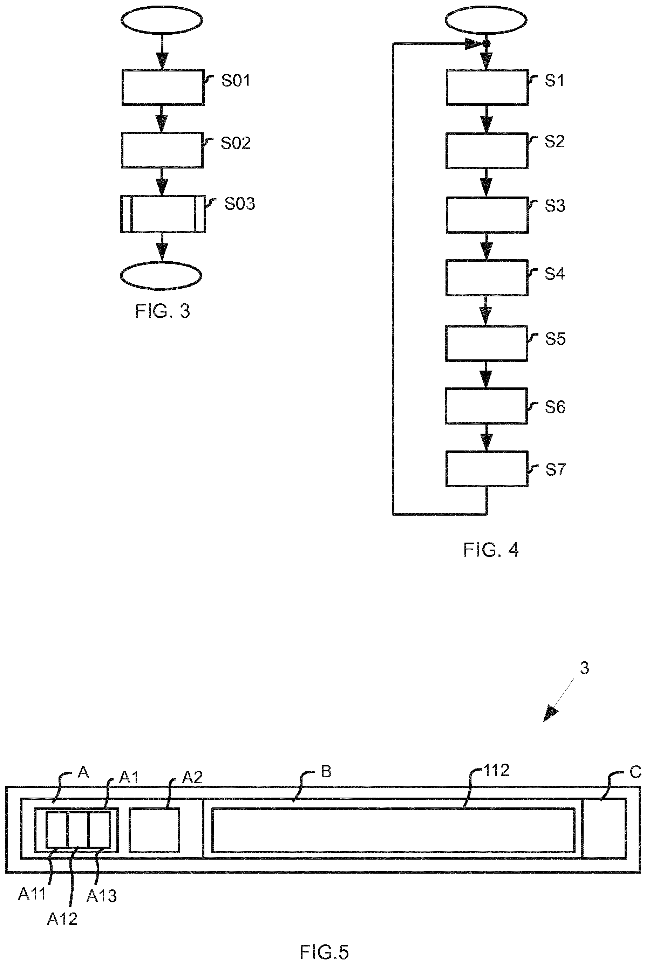

Wie in Fig. 3 veranschaulicht, wird bei einem Verfahren für das Werkzeugsystem 1 nach dem Start des Verfahrens bei einem Schritt S01 die Datenbehandlungseinrichtung 30 aktiv. Die Datenbehandlungseinrichtung 30 stellt mit Hilfe der Auswahlbereitstelleinheit 31 für den Anwender eine Auswahlmöglichkeit für die Art oder Inhalt und Form der Daten bereit, die der Anwender in einer Anzeige überlagern möchte, wie zuvor beschrieben. Die Datenbehandlungseinrichtung 30 stellt die Auswahlmöglichkeit beispielsweise in einer Liste und/oder Tabelle auf einer der Anzeigeeinrichtungen 35, 36, 37 oder dem Prozessdatencockpit 50 bereit. Danach geht der Fluss zu einem Schritt S02 weiter.

Bei dem Schritt S02 wählt der Anwender aus den Daten 112, 122, 132, 142, 113, 123, 133, 143 und den Werkzeugsteuerungen 11, 12, 13, 14 die Überlagerungsdaten 311 aus. Außerdem wählt er die Form aus, wie die Überlagerungsdaten 311 präsentiert werden sollen, wie zuvor beschrieben. Nach Abschluss der Auswahl durch den Anwender geht der Fluss zu einem Schritt S03 weiter.

Bei dem Schritt S03 kann eine Routine zum Normalbetrieb des Werkzeugsystems 1 gestartet werden. Die Routine ist in Fig. 4 näher veranschaulicht. Nach Beendigung der Routine ist das Verfahren beendet.

Wie in Fig. 4 veranschaulicht, wird nach dem Start der Routine von Schritt S03 aus Fig. 3 bei einem Schritt S1 mit einer der Werkzeugsteuerungen 11 bis 14 das jeweils zugehörige Werkzeugelement 111, 121, 131, 141 zur Behandlung mindestens eines der Werkstücke 8 angesteuert. Danach geht der Fluss zu einem Schritt S2 weiter.

Bei dem Schritt S2 werden die bei der Behandlung des oder der Werkstücke 8 erzeugten Prozessdaten 112, 122, 132, 142 von der betroffenen Werkzeugsteuerung 11 bis 14 an die erste Datenbehandlungseinrichtung 20 gesendet, wie zuvor beschrieben. Danach geht der Fluss zu einem Schritt S3 weiter.

Bei dem Schritt S3 werden die aufgrund der Behandlung des oder der Werkstücke 8 erzeugten Qualitätsdaten 112, 122, 132, 142 von der betroffenen Werkzeugsteuerung 11 bis 14 an die zweite Datenbank 22 gesendet, wie zuvor beschrieben. Danach geht der Fluss zu einem Schritt S4 weiter.

Bei dem Schritt S4 werden die von der Werkzeugsteuerung 11 bis 14 bei der Behandlung des oder der Werkstücke 8 erzeugten Prozessdaten 112, 122, 132, 142 von der ersten Datenbehandlungseinrichtung 20 entgegengenommen. Danach geht der Fluss zu einem Schritt S5 weiter.

Bei dem Schritt S5 veranlasst die erste Datenbehandlungseinrichtung 20, dass die Prozessdaten 112, 122, 132, 142 in der ersten Datenbank 21 gespeichert werden, woraufhin die Prozessdaten 112, 122, 132, 142 in der ersten Datenbank 21 gespeichert werden. Danach geht der Fluss zu einem Schritt S6 weiter.

Bei dem Schritt S6 verarbeitet die zweite Datenbehandlungseinrichtung 30 die Prozessdaten 112, 122, 132, 142. Hierfür greift die zweite Datenbehandlungseinrichtung 30 auf die erste Datenbank 21, 22 zu und analysiert bei Bedarf die Überlagerungsdaten 311. Außerdem überlagert die zweite Datenbehandlungseinrichtung 30 mit Hilfe der Überlagerungseinheit 32 die Überlagerungsdaten 311, damit das Ergebnis der Überlagerung an einer Anzeigeeinrichtung, wie beispielsweise der Web-Anzeigeeinrichtung 35 angezeigt werden kann, wie als Beispiel in Fig. 2 gezeigt. Das Ergebnis der Überlagerung kann auch als Anzeigedaten 312 bezeichnet werden. Somit sendet die Datenbehandlungseinrichtung 30 Anzeigedaten 312 an zumindest eine der Anzeigeeinrichtungen 35, 36, 37. Danach geht der Fluss zu einem Schritt S7 weiter.

Bei dem Schritt S7 werden die Anzeigedaten 312 von beispielsweise der Anzeigeeinrichtung 35 angezeigt, wie in Fig. 2 als Beispiel gezeigt.

Danach geht der Fluss zu dem Schritt S1 zurück, so dass die Routine gemäß Fig. 4 für dieselbe oder eine andere Werkzeugsteuerung 11, 12, 13, 14 gestartet werden kann, wie zuvor beschrieben.

Bei der Routine gemäß Fig. 4 können im Zusammenhang mit dem Verfahren von Fig. 3 die Schritte S1 bis S5 auch weggelassen werden, wenn bereits genügend Daten 112, 113, 122, 123, 132, 133, 142, 143 in den Datenbanken 21, 22 gespeichert sind. Außerdem kann der Schritt S3 alternativ auch vor oder zumindest teilweise zeitgleich mit dem Schritt S2 ausgeführt werden. Durch die zuvor beschriebene Architektur des Werkzeugsystems 1 wird, neben der Funktionalität der Überlagerung der Kurven 7, 8, zum einen die Unabhängigkeit von bestehenden IT-Infrastrukturen (z.B. Qualitätsdatenbank) erreicht und weitere prozessrelevante Daten für Überwachung (Monitoring) und Analysen gespeichert. Außerdem ist die mit dem Werkzeugsystem 1 realisierte Lösung durch die offene Schnittstelle zu allen Steuerungen 10 bis 14 kompatibel, die das offene Protokoll unterstützen.

Durch diesen architektonischen Aufbau des Werkzeugsystems 1 können die durch die Firewalls 70, 80 geschützten Zonen für die Montageanlage 100, Schutzzone 200 und Office-Intranet 300 sicher überbrückt werden, wie zuvor beschrieben. Dadurch kann vom Niveau des Anwenders (Office-Level) in dem Office-Intranet 300 auf Daten aus der Herstellung oder Produktion, nämlich die Prozessdaten 112, 122, 132, 142, auf sichere Art und Weise zugegriffen werden.

Fig. 5 zeigt den Aufbau eines Datenrahmens 3 für die Prozessdaten 112 als Beispiel in Bezug auf ein zweites Ausführungsbeispiel der Montageanlagen 100, 105 beziehungsweise des Werkzeugsystems 1. Die Datenrahmen für die Prozessdaten 122, 132, 142 sind jedoch auf die gleiche Weise aufgebaut.

Wie in Fig. 5 gezeigt, sind die Prozessdaten 112, 122, 132, 142 in einen Datenrahmen 3 gemäß einem vorbestimmten Protokoll gepackt. Anders ausgedrückt, bei dem Werkzeugsystem 1 werden die Prozessdaten 112, 122, 132, 142 gemäß dem vorbestimmten Protokoll gesendet. Insbesondere können die Prozessdaten 112, 122, 132, 142 gemäß dem im Entwurf befindlichen JSON-Protokoll gesendet werden. Nachfolgend sind in Anführungszeichen gestellte Begriffe, wie "node id" usw. Bezeichnungen des JSON-Protokolls.

Gemäß dem vorbestimmten Protokoll ist den Prozessdaten 112 ein Datenkopf A vorangestellt und sind die Prozessdaten 112 einem Datenteil B zugeordnet, welchem ein Schlussteil C folgt. Der Datenkopf A wird zuerst an die erste Datenbehandlungseinrichtung 20 übertragen, der Schlussteil C zuletzt. In dem Datenkopf A sind Stammdaten A1 der Werkzeugsteuerung 11 und Informationen A2 zu den Prozessdaten 112 angeordnet. Der Schlussteil C weist Steuerbits auf, welche das Ende des durch Datenkopf A, Datenteil B und Schlussteil C aufgebauten Datenrahmens anzeigen.

Die Stammdaten A1 weisen, neben nicht dargestellten Steuerbits, die Identifikationsnummer A11 der Werkzeugsteuerung 11 den Montageort A12 der Werkzeugsteuerung 11 und den Namen A13 der Werkzeugsteuerung 11 auf. Es ist jedoch auch möglich, dass die Stammdaten A1 neben den nicht dargestellten Steuerbits nur die Identifikationsnummer A11 oder den Montageort A12 oder den Namen A13 der Werkzeugsteuerung 11 aufweisen. Es sind auch beliebige andere Kombinationen möglich. Die Stammdaten A1 können an beliebiger Stelle im Datenkopf A angeordnet sein, je nachdem, wie dies im vorbestimmten Protokoll festgelegt ist.

Zusätzlich oder alternativ können die Stammdaten A1 der Werkzeugsteuerung 11 neben der Identifikationsnummer A11 "node id" der Werkzeugsteuerung 11 und/oder dem Montageort A12 "location name" der Werkzeugsteuerung 11 und/oder dem Namen A13 "channel" der Werkzeugsteuerung 11 auch ein Format "format" der Werkzeugsteuerung 11 aufweisen, das als Wert "channel" oder "application" für Anwendung hat. Zusätzlich oder alternativ können die Stammdaten A1 auch die laufende Nummer "nr" der Werkzeugsteuerung 11 in der Montageanlage 100 aufweisen. Zusätzlich oder alternativ können die Stammdaten A1 auch eine Hardwarebezeichnung "hardware" der Werkzeugsteuerung 11 aufweisen. Zusätzlich oder alternativ können die Stammdaten A1 auch eine MAC-Adresse "mac0" der Werkzeugsteuerung 11 aufweisen. Zusätzlich oder alternativ können die Stammdaten A1 auch die IP-Adresse "ip0" der Werkzeugsteuerung 11 aufweisen. Zusätzlich oder alternativ können die Stammdaten A1 auch die Seriennummer "tool serial" der Werkzeugsteuerung 11 aufweisen. Je nach Bedarf sind auch andere Angaben zu der Werkzeugsteuerung 11 in den Stammdaten A1 möglich.

Die Informationen A2 zu den Prozessdaten 112 können aufweisen: ein Ergebnis "result" des mit der Werkzeugsteuerung 11 durchgeführten Prozesses, beispielsweise die Qualitätsdaten 113; ein Datum "date" des mit der Werkzeugsteuerung 11 durchgeführten Prozesses; die Softwareversion der Software "sw Version" der Werkzeugsteuerung 11; eine Softwareaufbaubezeichnung (Software Build Bezeichnung) "sw build" der Software der Werkzeugsteuerung 11; eine Nummer "pgr nr" des mit der Werkzeugsteuerung 11 durchgeführten Prozesses; einen Namen "prg name" des mit der Werkzeugsteuerung 11 durchgeführten Prozesses; eine letzte Änderung eines Programms "prg date" des mit der Werkzeugsteuerung 11 durchgeführten Prozesses mit Datum und in Worten; eine Identifikationsnummer "id code" des / der bearbeiteten Werkstücks / Werkstücke 8; die Einheit der gemessenen physikalischen Größe, wie beispielsweise Drehmoment beim Schraubprozess "torque unit"; ein Abbruchkriterium "last cmd" für den durchgeführten Prozess; eine Identifikationsnummer der Einrichtung, welche den Abbruch des durchgeführten Prozesses vorgenommen hat "stopped by"; eine Dauer "duration" des durchgeführten Prozesses. Bei einem Schraubprozess können zusätzlich eine Zeilenbezeichnung der letzten Stufe "last step row" und/oder eine Spaltenbezeichnung der letzten Stufe "last step column" in den Informationen A2 zu den Prozessdaten 112 vorhanden sein.

Nachfolgend ist ein Beispiel für die Informationen in einem Datenkopf A für Prozessdaten eines Schraubprozesses angegeben:

```
 "format": "channel",
 "node id": "5.4",
 "nr": 34,
 "result": "OK",
 "hardware": "SE352M",
 "mac0": "00-C0-3A-6E-4a-76",
 "ip0": "10.23.232.162",
 "sw version": "2.400",
 "sw build": "Release",
 "location name": ["1", "2", "3", "4", "5", "6", "7"],
 "channel": "54 BG1 LT353 DMC",
 "prg nr": 0,
 "prg name": "XY_OKVerschraubunBG3",
 "prg date": "2010-03-22 13:35:53",
 "nominal torque": 59.400000,
 "date": "2014-11-25 13:32:28",
 "id code": "L 000000007960",
 "torque unit": "Nm",
 "last cmd": "TF Angle",
 "stopped by": 4,
 "last step row": "15",
 "last step column": "A",
 "duration": "10.9",
 "tool serial": 781000036
```

Die Prozessdaten 112 umfassen hingegen Informationen zu dem durchgeführten Prozess, wie beispielsweise bei einem Schraubvorgang: "tightening steps": [{

```
           "row":"2",
           "column": "A",
           "name": "500 Grad Links",
           "last cmd": "TF Angle",
           "stopped by": 4,
           "result": "OK",
           "tightening functions": [{
           "name": "TF Angle",
           "nom": 500,
           "act": 500
           },
           {
           "name": "MF GradientMax",
           "nom": 11,
           "act": -0.043000
           }],
           "graph": {
           "angle values": [],
           "torque values": [],
           "time values": []
           }
           }
```

Die Schraubstufen "tightening steps" werden unverändert in der ersten Datenbank als JSON-String abgespeichert.

Aus den Schraubfunktionen "tightening functions" der bewertenden Stufe (Stufe aus "last step column" und "last step row") werden zusätzlich die minimalen und maximalen Werte sowie die Endwerte ausgelesen und in der Prozessdatentabelle in der ersten Datenbank 21 abgespeichert. Falls es sich bei der bewertenden Stufe um eine erweiterte Schraubstufe "extended" handelt wird diese auch korrekt ausgewertet.

Damit die minimalen und maximalen Werte korrekt ausgelesen und abgespeichert werden, müssen diese in den Schraubfunktionen "tightening functions" enthalten sein, wie beispielsweise "TF AngleMin", "MF Torque Max" oder für eine erweiterte Schraubstufe "extended" in "UfB_MOMENT_MAXWERT_CMD".

Um die graphische Darstellung der Schraubkurve nutzen zu können, müssen in dem JSON Objekt "graph" die Felder Drehwinkelwerte "angle values", Drehmomentwerte "torque values" und Zeitwerte "time values" in Sekunden befüllt sein.

Die Prozessdaten für andere Fügeprozesse, wie Schweißen, Nieten, usw. sind an die für diese Fügeprozesse charakteristischen Werte entsprechend angepasst.

Somit schicken die Werkzeugsteuerungen 11, 12, 13, 14 aktiv nach jedem Schraubvorgang Prozessdaten (einzelne Messwerte, Messkurven etc.) mit dem vorbestimmten Protokoll gemäß Fig. 5. Da der Kopfteil A1 des Datenrahmens 3 in dem vorbestimmten Protokoll gemäß Fig. 5 die Stammdaten A der sendenden Werkzeugsteuerung 11, 12, 13, 14 enthält, weiß die empfangende erste Datenbehandlungseinrichtung 20, ob es sich um Daten von einer bereits bekannten Werkzeugsteuerung 11, 12, 13, 14 handelt und kann die Prozessdaten 112, 122, 132, 142 entsprechend zuordnen. Handelt es sich um Daten von einer bis dato nicht bekannten Werkzeugsteuerung 11, 12, 13, 14, wird die Werkzeugsteuerung 11, 12, 13, 14 von der ersten Datenbehandlungseinrichtung 20 als "nicht zugeordnet" mit ihren Stammdaten A im Übersichtsbaum der Software der ersten Datenbehandlungseinrichtung 20 angelegt.

Ist beispielsweise die Werkzeugsteuerung 11 noch nicht bei der Datenbehandlungseinrichtung 20 und somit der ersten Datenbank 21 bekannt, kann der Anwender die Werkzeugsteuerung 11 dann bequem dem/der entsprechenden Werk/Halle/Anlage im Übersichtsbaum der Software der ersten Datenbehandlungseinrichtung 20 zuordnen. Somit ist für die Werkzeugsteuerung 11 keine händische Eingabe von Stammdaten A, wie Identifikationsnummer A11, Montageort A12, Name A13, etc., notwendig.

Auf diese Weise können die Werkzeugsteuerungen 11, 12, 13, 14, die mit der als Software ausgeführten ersten Datenbehandlungseinrichtung 20 verbunden sind, einfach mit ihren Stammdaten A im Werkzeugsystem 1 angelegt werden, so dass die Werkzeugsteuerungen 11, 12, 13, 14 Daten an die als Software ausgeführte erste Datenbehandlungseinrichtung 20 schicken können. Die Werkzeugsteuerungen 11, 12, 13, 14 melden sich somit automatisch am Werkzeugsystem 1 mit ihren Stammdaten A an, sobald der erste Datensatz mit dem in Fig. 5 gezeigten Aufbau geschickt wird. Damit wird der Aufwand zum Einbinden einer neuen Werkzeugsteuerungen 11, 12, 13, 14 in das Werkzeugsystem 1 geringer als bisher.

Dadurch bietet das Werkzeugsystem 1 ebenfalls eine offene Schnittstelle, die es erlaubt, jede Steuerung 10, 11, 12, 13, 14 daran anzuschließen, die das definierte Datenformat des vorbestimmten Protokolls gemäß Fig. 5 unterstützt. Außerdem ist das Werkzeugsystem 1 komplett unabhängig von bestehender IT-Infrastruktur und beeinflusst diese daher nicht. Somit kann auch mit dieser Lösung aus dem Office-Level auf Produktionsdaten, also die Prozessdaten 112, 122, 132, 142 zugegriffen werden.

Alle zuvor beschriebenen Ausgestaltungen des Werkzeugsystems 1 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert oder auch weggelassen werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Montageanlage 100 kann eine beliebige Montageanlage sein, wie beispielsweise eine Schraubanlage, eine Schweißanlage, usw.. Hierbei kann jede beliebige Fügetechnik zum Einsatz kommen. Allgemein können in der Montageanlage 100 Prozesse (z.B. gemäß Schraubtechnik, Schweißtechnik, Niettechnik, Stanztechnik, Bohrtechnik, usw.) stattfinden, die Daten in einer in einem zweidimensionalen Koordinatensystem abbildbaren Form liefern. Somit kann mindestens eine Werkzeugsteuerung 11 bis 14 des Werkzeugsystems 1 eine Schweißsteuerung sein. Alternativ oder zusätzlich kann mindestens eine Werkzeugsteuerung 11 bis 14 des Werkzeugsystems 1 eine Schraubsteuerung sein. Alternativ oder zusätzlich kann mindestens eine Werkzeugsteuerung 11 bis 14 des Werkzeugsystems 1 eine Bohrsteuerung sein. Alternativ oder zusätzlich kann mindestens eine Werkzeugsteuerung 11 bis 14 des Werkzeugsystems 1 eine Nietsteuerung sein. Alternativ oder zusätzlich kann mindestens eine Werkzeugsteuerung 11 bis 14 des Werkzeugsystems 1 eine Stanzsteuerung sein.

Die Anzahl der Werkzeugsteuerungen 11 bis 14 ist beliebig wählbar. Insbesondere können ca. 2000 Werkzeugsteuerungen 11 bis 14 vorgesehen und in das Werkzeugsystem 1 eingebunden sein.

Auch die Produktionssteuerung 10 kann Daten an die erste Datenbehandlungseinrichtung 20 und die zweite Datenbank 22 senden, auch wenn dies in Fig. 1 nicht dargestellt ist.

Es ist auch denkbar, dass die zweite Datenbehandlungseinrichtung 30 auch auf die zweite Datenbank 22 zugreifen kann, um die Qualitätsdaten 113, 123, 133, 143 beispielsweise auf mindestens einer der Web-Anzeigeeinrichtungen 31, 32, 33 anzuzeigen oder in ihre Analyse mit einzubeziehen.

Außerdem ist es möglich, dass auch die Qualitätsdaten 113, 123, 133, 143 in dem vorbestimmten Protokoll gemäß Fig. 5 gesendet werden.

Zusätzlich oder alternativ zu den Web-Anzeigeeinrichtungen 31, 32, 33 kann auch eine nur mit dem Office-Intranet 300 angeschlossene Anzeigeeinrichtung zumindest einen Teil der Daten 112, 113, 122, 123, 132, 133, 142, 143 anzeigen.

## Patentansprüche

1. Werkzeugsystem (1) zur Anzeige einer Überlagerung von Prozesskurven (7, 8) von mindestens einer Montageanlage (100; 105), mit mindestens zwei Werkzeugsteuerungen (11 bis 14) zur Steuerung von jeweils mindestens eines Werkzeugelements (111, 121, 131, 141) zur Behandlung mindestens eines Werkstücks (8),
einer ersten Datenbehandlungseinrichtung (20) zur Entgegennahme von von den mindestens zwei Werkzeugsteuerungen (11 bis 14) bei der Behandlung des mindestens einen Werkstücks (8) erzeugten Prozessdaten (112, 122, 132, 142), und Speicherung der Prozessdaten (112, 122, 132, 142) in einer ersten Datenbank (21),
wobei die mindestens zwei Werkzeugsteuerungen (11 bis 14) ausgestaltet sind, nach einer Behandlung mindestens eines Werkstücks (8) mit dem Werkzeugelement (111, 121, 131, 141) Prozessdaten (112, 122, 132, 142) mit einem vorbestimmten Protokoll an die erste Datenbehandlungseinrichtung (20) zu schicken,
wobei den Prozessdaten (112, 122, 132, 142) gemäß dem vorbestimmten Protokoll ein Datenkopf (A) vorangestellt ist, in dem Stammdaten (A1) der Werkzeugsteuerung (11 bis 14) und Informationen (A2) zu den Prozessdaten (112, 122, 132, 142) angeordnet sind,
wobei die Prozessdaten (112, 122, 132, 142) nach dem Datenkopf (A) einen Datenteil (B) mit Informationen zu einem mit der Werkzeugsteuerung (11 bis 14) durchgeführten Prozess umfassen, und
wobei die erste Datenbehandlungseinrichtung (20) ausgestaltet ist, die Prozessdaten (112, 122, 132, 142) in der ersten Datenbank (21) entsprechend der Werkzeugsteuerung (11 bis 14) unter Verwendung der Stammdaten (A1) des Datenkopfs (A) zuzuordnen, um die Prozessdaten (112, 122, 132, 142) in der ersten Datenbank (21) zu speichern,
einer zweiten Datenbehandlungseinrichtung (30) zur Behandlung der Prozessdaten (112, 113, 122, 123, 132, 133, 142, 143), die von den mindestens zwei Werkzeugsteuerungen (11 bis 14) bei einer Behandlung des mindestens einen Werkstücks (8) erzeugt wurden, wobei die zweite Datenbehandlungseinrichtung (30) zum Zugriff auf die erste Datenbank (21), zur Verarbeitung der von der ersten Datenbehandlungseinrichtung (20) in der ersten Datenbank (21) gespeicherten Prozessdaten (112, 122, 132, 142), für eine Analyse der Prozessdaten (112, 122, 132, 142) und die Erstellung einer Visualisierung der Daten (112, 122, 132, 142) ausgestaltet ist, und
einer Auswahlbereitstelleinheit (31) zur Bereitstellung einer Auswahl für einen Anwender, welche Prozessdaten (112, 113, 122, 123, 132, 133, 142, 143) und in welcher Form als Überlagerungsdaten (311) in einer überlagerten Anzeige angezeigt werden sollen,
wobei die Auswahlbereitstelleinheit (31) ausgestaltet ist, als Auswahl die zu überlagernden Werkzeugsteuerungen (11, 12, 13, 14), deren Prozesskanäle und entsprechende Prozesskurven (7, 8) bereitzustellen,
wobei die zweite Datenbehandlungseinrichtung (30) ausgestaltet ist, die von mindestens zwei Werkzeugelementen (111, 121, 131, 141) erzeugten Prozessdaten (112, 113, 122, 123, 132, 133, 142, 143) gemäß der vom Anwender getroffenen Auswahl in einer Anzeige zumindest teilweise derart zu überlagern, dass eine überlagerte Anzeige von Prozesskurven (7, 8) mehrerer Werkzeugelemente einen Vergleich von Prozesskurven (7, 8) über mehrere Werkzeugelemente hinweg ermöglicht, um Unterschiede zu erkennen und Probleme im Produktionsprozess zu identifizieren.

2. Werkzeugsystem (1) nach Anspruch 1, wobei die Prozessdaten (112, 113, 122, 123, 132, 133, 142, 143) in der überlagerten Anzeige Schraubkurven von zwei oder mehreren Spindeln umfassen, die unmittelbar nebeneinander, im gleichen Werk oder in verschiedenen Werken weltweit eingesetzt sind.

3. Werkzeugsystem (1) nach Anspruch 1 oder 2, wobei die Datenbehandlungseinrichtung (30) ausgestaltet ist, die Prozessdaten (112, 113, 122, 123, 132, 133, 142, 143) derart zu behandeln, dass die daraus resultierenden Überlagerungsdaten (311) für die mindestens zwei Werkzeugsteuerungen (11 bis 14) in verschiedenen Farben angezeigt werden.

4. Werkzeugsystem (1) nach einem der vorangehenden Ansprüche,
wobei die mindestens zwei unterschiedlichen Werkzeugsteuerungen (11 bis 14) an verschiedenen Standorten eines Betreibers des Werkzeugsystems (1) angeordnet sind

5. Werkzeugsystem (1) nach einem der vorangehenden Ansprüche,
wobei die mindestens zwei unterschiedlichen Werkzeugsteuerungen (11 bis 14) in der gleichen Montageanlage (100; 105) oder in verschiedenen Montageanlagen (100, 105) angeordnet sind.

7. Werkzeugsystem (1) nach einem der vorangehenden Ansprüche,
wobei die Prozessdaten (112, 122, 132, 142) Messwerte in Form von einzelnen Zahlenwerten oder Messkurven umfassen.

8. Werkzeugsystem (1) nach einem der vorangehenden Ansprüche,
wobei die mindestens zwei Werkzeugsteuerungen (11 bis 14) zudem ausgestaltet sind, aktiv nach einem Behandlungsvorgang Qualitätsdaten (113, 123, 133, 143) an die erste Datenbehandlungseinrichtung (20) zu schicken, die eine Aussage umfassen, ob die Behandlung des mindestens einen Werkstücks (8) mit dem Werkzeugelement (111, 121, 131, 141) in Ordnung oder nicht in Ordnung war.

9. Werkzeugsystem (1) nach Anspruch 8, wobei die zweite Datenbehandlungseinrichtung (30) zudem zur Behandlung der Qualitätsdaten (113, 123, 133, 143) in Bezug auf die Qualität der Behandlung des mindestens einen Werkstücks (8) mit dem Werkzeugelement (111, 121, 131, 141) ausgestaltet ist.

10. Werkzeugsystem (1) nach einem der vorangehenden Ansprüche, zudem mit einer Anzeigeeinrichtung (35), die mit dem Werkzeugsystem (1) über das Internet verbunden ist.

11. Werkzeugsystem (1) nach einem der vorangehenden Ansprüche,
wobei die erste Datenbehandlungseinrichtung (20) und die erste und zweite Datenbank (21, 22) in einer Schutzzone (200) angeordnet sind, die durch eine erste Firewall (70) von den mindestens zwei Werkzeugsteuerungen (11 bis 14) getrennt ist, und
wobei die zweite Datenbehandlungseinrichtung (30) einer Zone für ein Office-Intranet (300) zugeordnet ist, die durch eine zweite Firewall (80) von der Schutzzone (200) getrennt ist.

12. Werkzeugsystem (1) nach einem der vorangehenden Ansprüche,
wobei die mindestens zwei Werkzeugsteuerungen (11 bis 14) mindestens eine Schweißsteuerung und/oder mindestens eine Schraubsteuerung und/oder mindestens eine Bohrsteuerung und/oder mindestens eine Nietsteuerung und/oder mindestens eine Stanzsteuerung aufweisen.

13. Verfahren für ein Werkzeugsystem (1) einer Montageanlage (100; 105), das mindestens zwei Werkzeugsteuerungen (11 bis 14) zur Steuerung von jeweils mindestens eines Werkzeugelements (111, 121, 131, 141) zur Behandlung mindestens eines Werkstücks (8), eine erste Datenbehandlungseinrichtung (20), eine zweite Datenbehandlungseinrichtung (30) und eine Auswahlbereitstelleinheit (31) aufweist, wobei das Verfahren die Schritte aufweist Entgegennehmen, mit der ersten Datenbehandlungseinrichtung (20), von von den mindestens zwei Werkzeugsteuerungen (11 bis 14) bei der Behandlung des mindestens einen Werkstücks (8) erzeugten Prozessdaten (112, 122, 132, 142), die, mit einem vorbestimmten Protokoll, von den mindestens zwei Werkzeugsteuerungen (11 bis 14) nach einer Behandlung mindestens eines Werkstücks (8) mit dem Werkzeugelement (111, 121, 131, 141) an die erste Datenbehandlungseinrichtung (20) geschickt werden, wobei den Prozessdaten (112, 122, 132, 142) gemäß dem vorbestimmten Protokoll ein Datenkopf (A) vorangestellt ist, in dem Stammdaten (A1) der Werkzeugsteuerung (11 bis 14) und Informationen (A2) zu den Prozessdaten (112, 122, 132, 142) angeordnet sind, wobei die Prozessdaten (112, 122, 132, 142) nach dem Datenkopf (A) einen Datenteil (B) mit Informationen zu einem mit der Werkzeugsteuerung (11 bis 14) durchgeführten Prozess umfassen, und
Zuordnen, mit der ersten Datenbehandlungseinrichtung (20), der Prozessdaten (112, 122, 132, 142) in der ersten Datenbank (21) entsprechend der Werkzeugsteuerung (11 bis 14) unter Verwendung der Stammdaten (A1) des Datenkopfs (A),
Speichern, mit der ersten Datenbehandlungseinrichtung (20), der Prozessdaten (112, 122, 132, 142) in der ersten Datenbank (21),
Behandeln, mit der zweiten Datenbehandlungseinrichtung (30), der Prozessdaten (112, 122, 132, 142), die von den mindestens zwei Werkzeugsteuerungen (11 bis 14) bei einer Behandlung des mindestens einen Werkstücks (8) erzeugt wurden, wobei die zweite Datenbehandlungseinrichtung (30) auf die von der ersten Datenbehandlungseinrichtung (20) in der ersten Datenbank (21) gespeicherten Prozessdaten (112, 122, 132, 142) zugreift, um die Prozessdaten (112, 122, 132, 142) für eine Analyse der Prozessdaten (112, 122, 132, 142) und Erstellung einer Visualisierung der Daten (112, 122, 132, 142) zu verarbeiten, und
Bereitstellen, mit einer Auswahlbereitstelleinheit (31), einer Auswahl für einen Anwender, welche Prozessdaten (112, 113, 122, 123, 132, 133, 142, 143) und in welcher Form als Überlagerungsdaten (311) in einer überlagerten Anzeige angezeigt werden sollen,
wobei die Auswahlbereitstelleinheit (31) als Auswahl die zu überlagernden Werkzeugsteuerungen (11, 12, 13, 14), deren Prozesskanäle und entsprechende Prozesskurven (7, 8) bereitstellt,
wobei die Datenbehandlungseinrichtung (30), die von mindestens zwei Werkzeugelementen (111, 121, 131, 141) erzeugten Daten (112, 113, 122, 123, 132, 133, 142, 143) gemäß der vom Anwender getroffenen Auswahl in einer Anzeige zumindest teilweise überlagert, um eine Überlagerung von Prozesskurven (7, 8) derart zu realisieren, dass eine überlagerte Anzeige von Prozesskurven (7, 8) mehrerer Werkzeugelemente einen Vergleich von Prozesskurven (7, 8) über mehrere Werkzeugelemente hinweg ermöglicht, um Unterschiede zu erkennen und Probleme im Produktionsprozess zu identifizieren.

## Claims

1. Tool system (1) for displaying an overlay of process curves (7, 8) of at least one assembly installation (100; 105), having
at least two tool controllers (11 to 14) for controlling in each case at least one tool element (111, 121, 131, 141) for machining at least one workpiece (8),
a first data processing apparatus (20) for receiving process data (112, 122, 132, 142) generated by the at least two tool controllers (11 to 14) during the machining of the at least one workpiece (8), and storing the process data (112, 122, 132, 142) in a first database (21),
wherein the at least two tool controllers (11 to 14) are designed, following machining of at least one workpiece (8) with the tool element (111, 121, 131, 141), to send process data (112, 122, 132, 142) to the first data processing apparatus (20) using a predetermined protocol,
wherein a data header (A) is prefixed to the process data (112, 122, 132, 142) in accordance with the predetermined protocol, said data header containing original data (A1) of the tool controller (11 to 14) and information (A2) about the process data (112, 122, 132, 142),
wherein the process data (112, 122, 132, 142) following the data header (A) comprise a portion of data (B) containing information about a process performed by the tool controller (11 to 14), and
wherein the first data processing apparatus (20) is designed to allocate the process data (112, 122, 132, 142) in the first database (21) according to the tool controller (11 to 14) using the original data (A1) of the data header (A) in order to store the process data (112, 122, 132, 142) in the first database (21),
a second data processing apparatus (30) for processing the process data (112, 113, 122, 123, 132, 133, 142, 143) that were generated by the at least two tool controllers (11 to 14) during machining of the at least one workpiece (8), wherein the second data processing apparatus (30) is designed to access the first database (21), to process the process data (112, 122, 132, 142) stored in the first database (21) by the first data processing apparatus (20), to analyse the process data (112, 122, 132, 142) and to create a display of the data (112, 122, 132, 142), and
a selection provision unit (31) for providing a selection for a user as to which process data (112, 113, 122, 123, 132, 133, 142, 143), and in what form, should be displayed as overlaid data (311) in an overlaid display,
wherein the selection provision unit (31) is designed to provide the tool controllers (11, 12, 13, 14) to be overlaid, their process channels and corresponding process curves (7, 8) as selection,
wherein the second data processing apparatus (30) is designed to at least partially overlay the process data (112, 113, 122, 123, 132, 133, 142, 143) generated by at least two tool elements (111, 121, 131, 141) in a display in accordance with the selection made by the user such that an overlaid display of process curves (7, 8) of multiple tool elements makes it possible to compare process curves (7, 8) across multiple tool elements in order to recognize differences and identify problems in the production process.

2. Tool system (1) according to Claim 1, wherein the process data (112, 113, 122, 123, 132, 133, 142, 143) in the overlaid display comprise screwing curves of two or more spindles that are used directly next to one another, in the same plant or in different plants worldwide.

3. Tool system (1) according to Claim 1 or 2, wherein the data processing apparatus (30) is designed to process the process data (112, 113, 122, 123, 132, 133, 142, 143) such that the resultant overlaid data (311) for the at least two tool controllers (11 to 14) are displayed in different colours.

4. Tool system (1) according to one of the preceding claims,
wherein the at least two different tool controllers (11 to 14) are arranged at different locations for an operator of the tool system (1).

5. Tool system (1) according to one of the preceding claims,
wherein the at least two different tool controllers (11 to 14) are arranged in the same assembly installation (100; 105) or in indifferent assembly installations (100, 105).

7. Tool system (1) according to one of the preceding claims,
wherein the process data (112, 122, 132, 142) comprise measured values in the form of individual numerical values or measurement curves.

8. Tool system (1) according to one of the preceding claims,
wherein the at least two tool controllers (11 to 14) are additionally designed, following a machining process, to actively send quality data (113, 123, 133, 143) to the first data processing apparatus (20), these comprising a statement as to whether the machining of the at least one workpiece (8) with the tool element (111, 121, 131, 141) was correct or incorrect.

9. Tool system (1) according to Claim 8, wherein the second data processing apparatus (30) is additionally designed to process the quality data (113, 123, 133, 143) in relation to the quality of the machining of the at least one workpiece (8) with the tool element (111, 121, 131, 141).

10. Tool system (1) according to one of the preceding claims, additionally having a display apparatus (35) that is connected to the tool system (1) via the Internet.

11. Tool system (1) according to one of the preceding claims,
wherein the first data processing apparatus (20) and the first and second database (21, 22) are arranged in a protected area (200) that is separated from the at least two tool controllers (11 to 14) by a first firewall (70), and
wherein the second data processing apparatus (30) is assigned to an area for an office intranet (300) that is separated from the protected area (200) by a second firewall (80).

12. Tool system (1) according to one of the preceding claims,
wherein the at least two tool controllers (11 to 14) have at least one welding controller and/or at least one screwing controller and/or at least one drilling controller and/or at least one riveting controller and/or at least one punching controller.

13. Method for a tool system (1) of an assembly installation (100; 105), having at least two tool controllers (11 to 14) for controlling in each case at least one tool element (111, 121, 131, 141) for machining at least one workpiece (8), a first data processing apparatus (20), a second data processing apparatus (30) and a selection provision unit (31), wherein the method comprises the following steps:
receiving, using the first data processing apparatus (20), process data (112, 122, 132, 142) generated by the at least two tool controllers (11 to 14) during the machining of the at least one workpiece (8), said process data being sent, by the at least two tool controllers (11 to 14), following machining of at least one workpiece (8) with the tool element (111, 121, 131, 141), to the first data processing apparatus (20) using a predetermined protocol, wherein a data header (A) is prefixed to the process data (112, 122, 132, 142) in accordance with the predetermined protocol, said data header containing original data (A1) of the tool controller (11 to 14) and information (A2) about the process data (112, 122, 132, 142), wherein the process data (112, 122, 132, 142) following the data header (A) comprise a portion of data (B) containing information about a process performed by the tool controller (11 to 14), and
allocating, using the first data processing apparatus (20), the process data (112, 122, 132, 142) in the first database (21) according to the tool controller (11 to 14) using the original data (A1) of the data header (A),
storing, using the first data processing apparatus (20), the process data (112, 122, 132, 142) in the first database (21),
processing, using the second data processing apparatus (30), the process data (112, 122, 132, 142) that were generated by the at least two tool controllers (11 to 14) during machining of the at least one workpiece (8), wherein the second data processing apparatus (30) accesses the process data (112, 122, 132, 142) stored in the first database (21) by the first data processing apparatus (20) so as to process the process data (112, 122, 132, 142) in order to analyse the process data (112, 122 132, 142) and to create a display of the data (112, 122, 132, 142), and
providing, using a selection provision unit (31), a selection for a user as to which process data (112, 113, 122, 123, 132, 133, 142, 143), and in what form, should be displayed as overlaid data (311) in an overlaid display,
wherein the selection provision unit (31) provides the tool controllers (11, 12, 13, 14) to be overlaid, their process channels and corresponding process curves (7, 8) as selection,
wherein the data processing apparatus (30) at least partially overlays the data (112, 113, 122, 123, 132, 133, 142, 143) generated by at least two tool elements (111, 121, 131, 141) in a display in accordance with the selection made by the user so as to overlay process curves (7, 8) such that an overlaid display of process curves (7, 8) of multiple tool elements makes it possible to compare process curves (7, 8) across multiple tool elements in order to recognize differences and identify problems in the production process.

## Revendications

1. Système d'outils (1) destiné à indiquer une superposition de courbes de processus (7, 8) d'au moins une installation de montage (100; 105), ledit système d'outils comprenant
au moins deux commandes d'outil (11 à 14) destiné à commander chacun au moins un élément d'outil (111, 121, 131, 141) destiné à traiter au moins une pièce (8),
un premier dispositif de traitement de données (20) destiné à recevoir des données de processus (112, 122, 132, 142) générées par les au moins deux commandes d'outil (11 à 14) pendant le traitement de l'au moins une pièce (8), et à mémoriser les données de processus (112, 122, 132, 142) dans une première base de données (21),
les au moins deux commandes d'outil (11 à 14) étant conçues pour envoyer, après traitement d'au moins une pièce (8) avec l'élément d'outil (111, 121, 131, 141), des données de processus (112, 122, 132, 142) avec un protocole prédéterminé au premier dispositif de traitement de données (20),
les données de processus (112, 122, 132, 142) étant précédées, conformément au protocole prédéterminé, d'un en-tête de données (A) dans lequel sont disposées des données de base (A1) de la commande d'outil (11 à 14) et des informations (A2) sur les données de processus (112, 122, 132, 142),
les données de processus (112, 122, 132, 142) après l'en-tête de données (A) comprenant une partie de données (B) comportant des informations relatives à un processus exécuté avec la commande d'outil (11 à 14), et
le premier dispositif de traitement de données (20) étant conçu pour associer les données de processus (112, 122, 132, 142) dans la première base de données (21) conformément à la commande d'outil (11 à 14) à l'aide des données de base (A1) de l'en-tête de données (A) pour mémoriser les données de processus (112, 122, 132, 142) dans la première base de données (21),
un deuxième dispositif de traitement de données (30) destiné à traiter les données de processus (112, 113, 122, 123, 132, 133, 142, 143) qui sont générées par les au moins deux commandes d'outil (11 à 14) lors du traitement de l'au moins une pièce (8), le deuxième dispositif de traitement de données (30) étant conçu pour accéder à la première base de données (21), pour traiter les données de processus (112, 122, 132, 142) mémorisées par le premier dispositif de traitement de données (20) dans la première base de données (21), pour analyser les données de processus (112, 122, 132, 142) et créer d'une visualisation des données (112, 122, 132, 142), et
une unité de production de sélection (31) destinée à permettre à un utilisateur de produire une sélection des données de processus (112, 113, 122, 123, 132, 133, 142, 143) à afficher et la forme sous laquelle elles doivent être affichées comme données de superposition (311) dans un affichage superposé,
l'unité de production de sélection (31) étant conçue pour produire comme sélection les commandes d'outil (11, 12, 13, 14) à superposer, leurs canaux de traitement et les courbes de traitement correspondantes (7, 8),
le deuxième dispositif de traitement de données (30) étant conçu pour superposer au moins partiellement les données de processus (112, 113, 122, 123, 132, 133, 142, 143), générées par au moins deux éléments d'outil (111, 121, 131, 141), selon le sélection effectuée par l'utilisateur sur un affichage de telle sorte qu'un affichage superposé des courbes de processus (7, 8) de plusieurs éléments d'outil permette une comparaison de courbes de processus (7, 8) sur plusieurs éléments d'outil afin de déceler des différences et d'identifier des problèmes dans le processus de production.

2. Système d'outils (1) selon la revendication 1, les données de processus (112, 113, 122, 123, 132, 133, 142, 143) dans l'affichage superposé comprenant des courbes de vissage de deux ou plusieurs broches qui sont utilisées directement l'une à côté de l'autre, dans la même usine ou dans différentes usines dans le monde entier.

3. Système d'outils (1) selon la revendication 1 ou 2, le dispositif de traitement de données (30) étant conçu pour traiter les données de processus (112, 113, 122, 123, 132, 133, 142, 143) de telle sorte que les données de superposition résultantes (311) soient affichées dans différentes couleurs pour les au moins deux outils de commande (11 à 14).

4. Système d'outils (1) selon l'une des revendications précédentes, les au moins deux commandes d'outil différentes (11 à 14) étant disposées sur des sites différents d'un opérateur du système d'outils (1)

5. Système d'outils (1) selon l'une des revendications précédentes, les au moins deux commandes d'outil différentes (11 à 14) étant disposées dans la même installation de montage (100 ; 105) ou dans des installations de montage différentes (100, 105).

7. Système d'outils (1) selon l'une des revendications précédentes, les données de processus (112, 122, 132, 142) étant des valeurs de mesure sous la forme de valeurs numériques individuelles ou de courbes de mesure.

8. Système d'outils (1) selon l'une des revendications précédentes,
les au moins deux commandes d'outil (11 à 14) étant également conçues pour envoyer activement des données de qualité (113, 123, 133, 143) au premier dispositif de traitement de données (20) après un processus de traitement, lesquelles données de qualité comprennent un avis sur la conformité ou non-conformité du traitement d'au moins une pièce (8) avec l'élément d'outil (111, 121, 131, 141).

9. Système d'outillage (1) selon la revendication 8, le deuxième dispositif de traitement de données (30) étant également conçu pour traiter les données de qualité (113, 123, 133, 143) concernant la qualité du traitement de l'au moins une pièce (8) avec l'élément d'outil (111, 121, 131, 141).

10. Système d'outils (1) selon l'une des revendications précédentes, comprenant également un dispositif d'affichage (35) qui est relié au système d'outils (1) par le biais d'Internet.

11. Système d'outils (1) selon l'une des revendications précédentes,
le premier dispositif de traitement de données (20) et les première et deuxième bases de données (21, 22) étant disposés dans une zone de protection (200) qui est séparée des au moins deux commandes d'outil (11 à 14) par un premier pare-feu (70), et
le deuxième dispositif de traitement de données (30) étant associé à une zone qui est destinée à un intranet de bureau (300) et qui est séparée de la zone de protection (200) par un deuxième pare-feu (80).

12. Système d'outillage (1) selon l'une des revendications précédentes,
les au moins deux commandes d'outil (11 à 14) comportant au moins une commande de soudage et/ou au moins une commande de vissage et/ou au moins une commande de perçage et/ou au moins une commande de rivetage et/ou au moins une commande de découpage.

13. Procédé destiné à un système d'outil (1) d'une installation de montage (100 ; 105) qui comporte au moins deux commandes d'outil (11 à 14) destinées à commander au moins un élément d'outil (111, 121, 131, 141) pour traiter au moins une pièce (8), un premier dispositif de traitement de données (20), un deuxième dispositif de traitement de données (30) et une unité de production de sélection (31), le procédé comprenant les étapes suivantes
recevoir, à l'aide du premier dispositif de traitement de données (20), des données de processus (112, 122, 132, 142) générées par les au moins deux commandes d'outil (11 à 14) pendant le traitement de l'au moins une pièce (8), lesquelles données de processus sont envoyées, avec un protocole prédéterminé, par les au moins deux commandes d'outil (11 à 14) au premier dispositif de traitement de données (20) après qu'au moins une pièce (8) a été traitée avec l'élément d'outil (111, 121, 131, 141), les données de processus (112, 122, 132, 142) étant précédées, conformément au protocole prédéterminé, d'un en-tête de données (A) dans lequel sont disposées des données de base (A1) de la commande d'outil (11 à 14) et des informations (A2) relatives aux données de processus (112, 122, 132, 142), les données de processus (112, 122, 132, 142) comprenant après l'en-tête de données (A) une partie de données (B) comportant des informations relatives à un processus exécuté avec la commande d'outil (11 à 14), et
associer, à l'aide du premier dispositif de traitement de données (20), les données de processus (112, 122, 132, 142) dans la première base de données (21) de manière correspondante à la commande d'outil (11 à 14) à l'aide des données de base (A1) de l'en-tête de données (A),
mémoriser, à l'aide du premier dispositif de traitement de données (20), les données de processus (112, 122, 132, 142) dans la première base de données (21),
traiter, à l'aide du deuxième dispositif de traitement de données (30), les données de processus (112, 122, 132, 142) générées par les au moins deux commandes d'outil (11 à 14) lors du traitement de l'au moins une pièce (8), le deuxième dispositif de traitement de données (30) accédant aux données de processus (112, 122, 132, 142) mémorisées par le premier dispositif de traitement de données (20) dans la première base de données (21) pour traiter les données de processus (112, 122, 132, 142) afin d'analyser les données de processus (112, 122, 132, 142) et créer une visualisation des données (112, 122, 132, 142), et
produire, à l'aide d'une unité de production de sélection (31), une sélection pour permettre à un utilisateur de sélectionner des données de processus (112, 113, 122, 123, 132, 133, 142, 143) à afficher et la forme sous laquelle elles doivent être affichées comme données de superposition (311) dans un affichage superposé,
l'unité de production de sélection (31) étant conçue pour produire comme sélection les commandes d'outil (11, 12, 13, 14) à superposer, leurs canaux de traitement et les courbes de traitement correspondantes (7, 8),
le deuxième dispositif de traitement de données (30) superposant au moins partiellement les données de processus (112, 113, 122, 123, 132, 133, 142, 143), générées par au moins deux éléments d'outil (111, 121, 131, 141), selon la sélection effectuée par l'utilisateur sur un affichage de telle sorte qu'un affichage superposé des courbes de processus (7, 8) de plusieurs éléments d'outil permette une comparaison de courbes de processus (7, 8) sur plusieurs éléments d'outil afin déceler des différences et d'identifier des problèmes dans le processus de production.
